# EUROPEAN PATENT SPECIFICATION

(11) **EP 3 473 457 B1**
(45) Date of publication and mention of the grant of the patent: **12.02.2020**
(21) Application number: 18199832.9
(22) Date of filing: 11.10.2018
(51) Int. Cl.: B60G 11/46, B62D 61/12

(54) **AXLE LIFT**
ACHSLIFT
RELEVAGE D'AXE

(30) Priority: 17.10.2017 NL 2019746
(43) Date of publication of application: 24.04.2019
(73) Proprietor: VDL Weweler B.V., 7325 WC Apeldoorn (NL)
(72) Inventor: BRAMER, Hans, 6961 WR Eerbeek (NL); TIJHUIS, Rutger William, 7424 EN Deventer (NL)
(74) Representative: EP&C

(56) References cited:
- EP-A1- 0 941 915
- EP-A1- 1 332 954
- EP-A1- 2 873 595
- EP-A1- 2 930 089
- DE-U1- 20 317 350

## Description

Such an axle lift mounted to an air sprung wheel axle suspension is known from, for example, EP-A-0941915. The known axle lift includes a support bar which extends between the legs of the supporting console. When the axle lift is assembled and mounted to the wheel axle suspension, the upper ends of the legs of the supporting console are hooked over the pivot bolt and the nut, and the support bar abuts the lower side of the carrying arm. The support bar is provided with a hooking strip, which is inserted into a slot in the front side of the carrying bracket. A risk with this axle lift is that in the event that the pivot bolt is moved forward to align the wheel axle, the supporting console moves with it and the hooking strip of the support bar is moved too far out of the slot in the front of the carrying bracket. Consequently the axle lift is not secured sufficiently to the carrying bracket, especially when the axle lift is not in use, whereby the axle lift could be lost while the vehicle is driving. Therefore in a practical embodiment the hook end of each of the legs of the supporting console is provided with an additional gripping part bolted to the leg. During assembly, the upper ends of the legs are hooked over the pivot bolt ends (bolt head, tensioning nut or accessories such as bushings or spacer rings) and the gripping part is brought in engagement with the pivot bolt ends from below and is then secured to the associated leg. Thus the pivot bolt, tensioning nut or accessory is gripped by a structure comparable to a pair of jaws, which prevents that the legs of the supporting console become disengaged from the pivot bolt. A disadvantage of this axle lift is the rather complex and time consuming assembly on an existing wheel axle suspension.

The invention has for an object to provide an axle lift which is more easily retrofitted to a wheel axle suspension.

This object is achieved by a wheel axle suspension according to the preamble of claim 1, wherein the axle lift furthermore comprises a supporting bracket which is connected to the supporting console, which supporting bracket in the mounted state abuts an underside of the carrying bracket to counteract the actuator force, which supporting bracket is adapted to be fixed to the carrying bracket and wherein the supporting bracket and/or the supporting console have an alignment feature to allow attachment of the supporting console to the carrying bracket in varying positions adaptive to the varying alignment positions of the pivot bolt in the carrying bracket.

To mount the axle lift according to the invention, the supporting bracket of the axle lift is simply fixed to the carrying bracket of the already assembled wheel axle suspension. The legs of the supporting console are brought in engagement with the pivot bolt ends and the legs are connected to the supporting bracket, in a mutual position that is dictated by the aligned position of the pivot bolt in the carrying bracket. In general the mentioned connections will be bolted connections, whereby by a simple well accessible connection the axle lift can be fitted to the wheel axle suspension.

In a preferred embodiment the supporting bracket comprises a transverse bar and flanges formed at opposite ends of the bar, which flanges extend parallel and under an angle, preferably perpendicular with respect to the bar, wherein the flanges are provided with a hole and wherein the legs of the supporting console are provided with a corresponding hole, wherein in an assembled state the hole in the flange and the hole in the corresponding leg are in register and a fixing bolt is passed through said holes to couple and secure the leg to the flange, wherein the alignment feature includes that either the hole in the flange or the hole in the flange is a slotted hole so as to allow adjustment of the position of the supporting console with respect to the supporting bracket.

In a further embodiment the bar is provided with an upstanding ear provided with a hole to be brought in register with a hole in a front plate of the carrying bracket for passing a fixing bolt to fix the supporting bracket to the carrying bracket. In general the hole in the front plate of the carrying bracket is an existing hole, whereby no adjustment has to be made to the carrying bracket of the assembled wheel axle suspension.

In a preferred embodiment the upper leg portions only engage a front side of the pivot bolt head and the tensioning nut or the accessories. With such an embodiment the assembled supporting console with the lifting actuator mounted on it can be simply brought into engagement with the pivot bolt ends and no additional acts are necessary but to secure the console to the supporting bracket.

In a practical embodiment the upper leg portions of the supporting console have a curved contour which in the assembled state engages a part of the circumference of the pivot bolt head, the tensioning nut or the accessories. The curved contour might be a hook shape, but it may also be a recess in the leg, e.g. a recess in the shape of a circle segment.
The invention also relates to a wheel axle suspension according to claim 6.

Furthermore the invention relates to a method for mounting the axle lift to an existing wheel axle suspension according to claim 9.

In the method the supporting bracket may be separately secured to the carrying bracket after which the supporting console is loosely connected to the supporting bracket and subsequently is positioned and secured in the desired position against the pivot bolt ends. However, it is also possible to loosely connect the supporting console to the supporting bracket, and then secure the entire axle lift as a unit to the carrying bracket by securing the supporting bracket to the carrying bracket, after which the supporting console can be correctly positioned and secured in the desired position against the pivot bolt ends.

The invention will be elucidated in the following description with reference to the drawing, in which:
Fig. 1 shows in a side elevational view an air sprung wheel axle suspension provided with an axle lift according to the invention,
Fig. 2 shows in a side view a lower part of a carrying bracket of the suspension of Fig. 1 provided with a supporting bracket of the axle lift according to the invention,
Fig. 3 shows in a view in perspective a supporting bracket of the axle lift according to the invention, and
Fig. 4 shows in detail a cross section of the supporting bracket mounted to the carrying bracket of the wheel axle suspension of Fig 1.

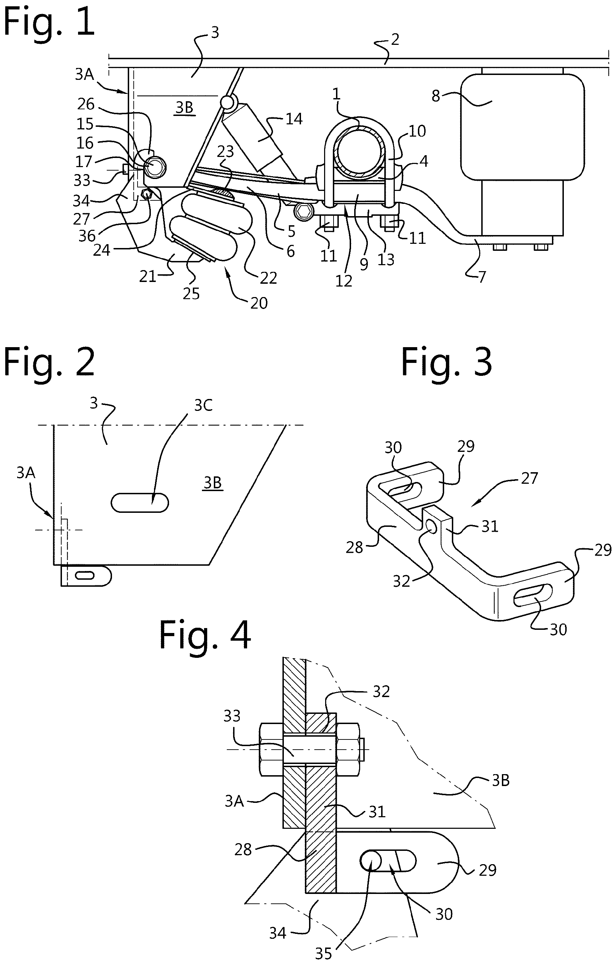

In Fig. 1 is shown a part of a wheel axle suspension for a utility vehicle such as a trailer, semi-trailer or a truck. Such a wheel axle suspension comprises an axle body 1, in this case a tubular axle body 1 with a circular cross section. In other possible embodiments the axle body may also have another cross section, for example rectangular, which is not shown in the figures. At the ends of the axle body 1, the vehicle wheels and other components can be mounted.

The axle body 1 is suspended from a vehicle chassis 2 by trailing arms 5. In Fig. 1 there is shown only one trailing arm 5, but in an air sprung wheel axle suspension, there are generally two substantially parallel trailing arms 5, one at either lateral side of the vehicle chassis 2, which are connected to the axle body 1. The trailing arms 5 extend in the longitudinal direction of the vehicle.

At a front end portion of the trailing arm 5 an eyelet is formed by which the trailing arm 5 can be pivotally connected by a pivot bolt 15 to a carrying bracket 3 of the vehicle chassis 2. At a rear end portion 7 of the trailing arm 5 an air spring 8 may be mounted, which air spring 8 at an upper end thereof supports the vehicle chassis 2. This is all common for the skilled person in the field of sprung wheel axle suspensions and will not be further elaborated here.

The trailing arm 5 in the shown embodiment is a so called flexible trailing arm, which has a spring portion 6 acting as a leaf spring. The spring portion 6 extends rearwardly from the eyelet. In general such flexible trailing arms are made of spring steel by means of a rolling process to give the spring portion 6 a parabolic thickness taper toward the front end. Flexible trailing arms can also be made in other ways, such as for example by forging. Also flexible trailing arms made of composite materials are contemplated. The invention however, is not limited to the use of axle lifts with suspension with a flexible trailing arm. Also rigid trailing arms are contemplated.

To position the axle body 1 with respect to the trailing arms 5 an axle pad 4 is provided, which is arranged between the axle body 1 and the trailing arm 5 at a clamping region 9 of the latter. The clamping region 9 of the trailing arm adjoins the spring portion 6 at a rear end thereof.

Between the axle body 1 and the clamping region 9 an axle pad 4 is arranged. The axle pad 4 is typically a metal cast part, but may also be made in another way. The axle pad 4 has an axle seat formed in it, which provides an engagement surface against which part of the circumference of a longitudinal section of the axle body 1 is clamped.

In the shown example tensioning means for clamping the trailing arm 5, the axle pad 4 and the axle body 1 together comprises two U-bolts 10, each located laterally from the trailing arm 5 and extending around the axle body 1. The shanks of the U-bolts 10 have threaded end portions adapted to screw threaded nuts 11 on. On the side 12 of the clamping region 9 of the trailing arm 5, which is facing away from the axle body 1, in this example the lower side of the clamping region 9, a strap plate 13 extends transversely over the trailing arm 5. The shanks of the respective U-bolts 10 extend downwardly along a lateral side of the trailing arm 5 and extend through holes provided in the strap plate 13. When tightening the nuts 11 the strap plate 13 functions as a counter element and the U-bolts 10 are tensioned and a clamping force results to clamp the axle body 1, the axle pad 4 and the trailing arm 5 together.

In the given example the wheel axle suspension also includes a shock absorber 14, which is pivotably connected to the carrying bracket 3 and to the strap plate 13. A shock absorber is not always present in an air sprung wheel axle suspension.

It is noted that in the example of Fig. 1 is shown a suspension wherein the trailing arms 5 cross the axle body underneath the axle body 1, which is called "underslung" arrangement. In other air sprung wheel axle suspensions known in the art the trailing arms cross the axle body above the axle body, which is called "overslung" arrangement.

The carrying bracket 3 has a front plate 3A and two lateral plates 3B. During assembly of the wheel axle suspension the eyelet on the front end portion of the trailing arm 5 is arranged between the lateral plates 3B. In the embodiment shown in the figures, the lateral plates 3B each have a slotted hole 3C as can be seen in Fig. 2. The eyelet of the trailing arm 5 can be connected to the carrying bracket 3 by passing the pivot bolt 15 through the slotted holes 3C and the eyelet and screwing a tensioning nut 16 on the pivot bolt 15. Before the tensioning nut 16 is tightened with the prescribed torque, the pivot bolt 15 can be positioned in the slotted holes 3C to align the axle body 1 with respect to the chassis 2. In practise the pivot bolt 15 might be moved 10-15 mm within the slotted hole 3C.

The wheel axle suspension is provided with an axle lift 20. An axle lift may be mounted to one of the carrying brackets 3 of the wheel axle suspension, but in general there can also be mounted an axle lift to both of the carrying brackets 3.

The axle lift 20 comprises a supporting console 21 and a lifting actuator 22 which is mounted with a lower end to the supporting console 21. The upper end of the actuator engages the trailing arm 5. The actuator 22 may have a cushion pad 23 made of rubber to engage the trailing arm, as is shown in the figure. The upper end of the actuator 22 is connected to a positioning arm 24, which is hinged around the eyelet of the trailing arm (not shown). Thereby the upper end of the actuator 22 has the same rotation axis as the trailing arm 5 when the trailing arm 5 is lifted by the actuator 22, whereby mutual shifting between the trailing arm and the upper end of the actuator 22 (in this case the cushion pad 23) is prevented. The lifting actuator is preferably a pneumatic actuator, in the given example a pneumatic bellows.

The supporting console 21 has a mounting platform 25 for the actuator 22.

The supporting console 21 has two legs 34 which extend upwardly and which extend each with at least an upper portion thereof along a lateral side of the carrying bracket. In the shown embodiment the upper portion of the leg 34 has a hook-shaped end 26, which is brought in engagement with the end of the pivot bolt 15. The pivot bolt end must be understood to be the pivot bolt head, the associated tensioning nut 16, or an accessory such as a bushing or a spacer ring 17 which can be arranged around the nut 16 or the pivot bolt head in case the latter does not have round shape, but for example a hexagonal shape. Accessories like bushings or spacer elements/rings are as such well known in the art to suspend an axle lift from the pivot bolt 15.

The hook shaped end 26 does not extend beyond the upper point of the bolt end, such that it is not restrained when it is moved away from the pivot bolt 15 horizontally forwardly. The hook shape thus does not really hook on the pivot bolt 15. The hook shape merely provides an enlargement of the engagement surface between the pivot bolt end and the upper end 26 of the supporting console 21 such that the surface pressure is reduced.

The axle lift 20 furthermore comprises a supporting bracket 27 to fix the supporting console 21 to the carrying bracket 3. The supporting bracket 27 is a metal part and is separately shown in Fig. 3. The supporting bracket 27 comprises a transverse bar 28 and flanges 29 formed at opposite ends of the bar 28. The flanges 29 extend parallel and under an angle, preferably perpendicular with respect to the bar 28. The flanges 29 are provided with a hole, in this case a slotted hole 30.

The bar 28 is provided with an upstanding ear 31 provided with a hole 32 to be brought in register with a hole in a front plate 3A of the carrying bracket 3 for passing a fixing bolt 33 to fix the supporting bracket 27 to the carrying bracket 3. Also an embodiment is conceivable, wherein the ear 31 and the front plate 3A have multiple holes and multiple fixing bolts 33 are used to secure the supporting bracket to the carrying bracket.

The respective flanges 29 of the supporting bracket 27 are located in the mounted state under the lateral plates 3B of the carrying bracket 3. The flanges 29 may abut the underside of the lateral plates 3B.

During assembly the supporting bracket 27 is secured to the carrying bracket 3 by means of the bolt 33. The legs 34 of the supporting console 21 are connected to the supporting bracket 27. Thereto the legs 34 of the supporting console 21 are each provided with a hole 35 that is brought in register with the slotted holes 30 of the supporting bracket 27 and fixing bolts 36 are passed through to secure the respective flanges 29 to the respective legs 34. During fitting of the axle lift on the vehicle suspension, the fixing bolt 36 and the associated leg 34 can be moved along the slotted hole 30 with respect to the flanges of the supporting bracket 27 so as to bring the leg 34 into engagement with the bolt ends (i.e. the bolt head, tensioning nut, bushing, spacer ring or the like) of the pivot bolt 15. Then the fixing bolt 36 may be tightened by an associated nut to secure the leg 34 of the supporting console to the flange 29 of the supporting bracket 27. The slotted hole 30 and the hole 35 in the leg 34 thus form an alignment feature which allow an easy adjustment of the axle lift position to the variable position of the pivot bolt in the carrying bracket 3.

In an alternative embodiment the hole in the flange may be circular and the hole in the flange may be a slotted hole so as to allow adjustment of the position of the supporting console 21 with respect to the supporting bracket 27.

In a preferred embodiment of the invention the supporting bracket 27 and the supporting console 21 with the actuator 22 mounted to it are already assembled before retrofitting it to the wheel axle suspension. The supporting console 21 is loosely connected to the supporting bracket 27 by the fixing bolts 36. The assembled axle lift is secured to the carrying bracket as a unit by the fixing bolt 33. Next the axle lift can be aligned such that the legs 34 of the supporting console 21 engage the respective pivot bolt ends after which the supporting console 21 can be secured to the supporting bracket 27 by tightening the fixing bolts 36.

In another embodiment the supporting bracket 27 can be separately mounted to the carrying bracket 3, after which the supporting console 21 is loosely coupled with the supporting bracket 27 by means of the fixing bolts 36. Next, the axle lift can be aligned such that the legs 34 of the supporting console 21 engage the respective pivot bolt ends after which the supporting console 21 can be secured to the supporting bracket 27 by tightening the fixing bolts 36.

It is noted that in the embodiment shown in the figures, the pivot bolt 15 may be moved in the slotted holes 3C in the lateral plates 3A of the carrying bracket 3 to align the axle body 1. However, also alternative alignment features are contemplated, for example an eccentric disc inserted in a recess in one of the lateral plates of the carrying bracket, whereby the pivot bolt can be positioned by rotating the disc. Another example of an alignment feature includes a wedge construction to move the pivot bolt.

## Claims

1. Axle lift (20) to be mounted to a wheel axle suspension of a vehicle;
the wheel axle suspension including a carrying bracket (3) mounted to a vehicle chassis (2), a trailing arm (5) attached to an axle body (1) of the wheel axle, a pivot bolt (15) having a head and a corresponding tensioning nut (16) as well as an air spring (8) which is operative between the chassis (2) and the axle body (1),
the trailing arm (5) being pivotably mounted to the carrying bracket (3) by means of the pivot bolt (15) and the tensioning nut (16), wherein the carrying bracket (3) comprises two spaced apart lateral plates (3B) each having a hole (3C) provided with an alignment feature, and wherein the pivot bolt (15) extends through said holes (3C) and an eyelet of the trailing arm (5) arranged between the lateral plates (3B) of the carrying bracket (3), the holes (3C) with the alignment feature allowing varying positions of the pivot bolt (15) in the carrying bracket (3) and thereby an alignment of the axle body (1) attached to the trailing arm (5);
the axle lift (20) comprising an actuator (22) adapted to lift the wheel axle and a supporting console (21) adapted to be mounted to the carrying bracket (3) and supporting one end of the actuator (22) underneath the carrying bracket (3), wherein the supporting console (21) has legs (34) extending along the lateral plates (3B) of the carrying bracket (3), which legs (34) have an upper leg portion (26) adapted to be arranged against the pivot bolt head and the tensioning nut (16), or against accessories (17) arranged around the pivot bolt head and/or tensioning nut (16), such as bushings, spacer rings or the like, wherein the axle lift (20) is adapted to be retrofitted to an existing wheel axle suspension without loosening the pivot bolt (15),
**characterized in that**
the axle lift (20) furthermore comprises a supporting bracket (27) which is connected to the supporting console (21), which supporting bracket (27) in the mounted state abuts an underside of the carrying bracket (3) to counteract the actuator force, which supporting bracket (27) is adapted to be secured to the carrying bracket (3) and wherein the supporting bracket (27) and/or the supporting console (21) have an alignment feature (30, 35) to allow securing of the supporting console (21) to the carrying bracket (3) in varying positions adaptive to the varying alignment positions of the pivot bolt (15) in the carrying bracket (3).

2. Axle lift according to claim 1, wherein the supporting bracket (27) comprises a transverse bar (28) and flanges (29) formed at opposite ends of the transverse bar (28), which flanges (29) extend parallel and under an angle, preferably perpendicular, with respect to the transverse bar (28), wherein the flanges (29) are provided with a hole (30) and wherein the legs (34) of the supporting console (21) are provided with a corresponding hole (35), wherein in an assembled state the hole (30) in the flange (29) and the hole (35) in the corresponding leg (34) are in register and a fixing bolt (36) is passed through said holes (30, 35) to couple and secure the leg (34) to the flange (29), wherein the alignment feature includes that either the hole (30) in the flange (29) or the hole (35) in the leg (34) is a slotted hole so as to allow adjustment of the position of the supporting console (21) with respect to the supporting bracket (27).

3. Axle lift according to claim 2, wherein the bar (28) is provided with an upstanding ear (31) provided with a hole (32) to be brought in register with a hole in a front plate (3A) of the carrying bracket (3) for passing a fixing bolt (33) to fix the supporting bracket (27) to the carrying bracket (3).

4. Axle lift according to any of the preceding claims, wherein the upper leg portions (26) only engage a front side of the pivot bolt head and the tensioning nut (16) or the accessories (17).

5. Axle lift according to any of the preceding claims, wherein the upper leg portions (26) of the supporting console (21) have a curved contour which in the assembled state engages a part of the circumference of the pivot bolt head, the tensioning nut (16) or the accessories (17).

6. Wheel axle suspension including a carrying bracket (3) mounted to a vehicle chassis (2), a trailing arm (5) attached to an axle body (1) of the wheel axle, a pivot bolt (15) having a head and a corresponding tensioning nut (16) as well as an air spring (8) which is operative between the chassis (2) and the axle body (1),
the trailing arm (5) being pivotably mounted to the carrying bracket (3) by means of the pivot bolt (15) and the tensioning nut (16), wherein the carrying bracket (3) comprises two spaced apart lateral plates (3B) each having a hole (3C) provided with an alignment feature, and wherein the pivot bolt (15) extends through said holes (3C) and an eyelet of the trailing arm (5) arranged between the lateral plates (3B) of the carrying bracket (3), the holes (3C) with the alignment feature allowing varying positions of the pivot bolt (15) in the carrying bracket (3) and thereby an alignment of the axle body (1) attached to the trailing arm (5),
**characterized in that** the wheel axle suspension is provided with an axle lift (20) according to any of the preceding claims.

7. Wheel axle suspension according to claim 6, wherein the alignment feature for the pivot bolt (15) is an elongate shape of the holes (3C) in the lateral plates (3B) of the carrying bracket (3), which allows a shifting of the pivot bolt (15) in a forward or rearward direction to align the axle (1) during assembly of the wheel axle suspension.

8. Wheel axle suspension according to claim 6, wherein the alignment feature of the pivot bolt (15) comprises an eccentric member, e.g. a disc, through which the pivot bolt (15) extends, and rotation of which provides a shifting of the pivot bolt (15) in a forward or rearward direction to align the axle (1) during assembly of the wheel axle suspension.

9. Method for mounting the axle lift (20) of claims 1- 5 to an existing wheel axle suspension, wherein:
- the supporting bracket (27) is fixedly attached to the carrying bracket (3),
- the supporting console (21) is loosely connected to the supporting bracket (27),
- the supporting console (21) is moved with respect to the supporting bracket (27) by means of the alignment feature of the axle lift (20), such that the legs (34) of the supporting console (21) are arranged against the pivot bolt head and the tensioning nut (16), or against accessories (17) arranged around the pivot bolt head and/or tensioning nut (16), and
- the supporting console (21) is secured to the supporting bracket (27).

## Patentansprüche

1. Achsenlift (20) zur Befestigung an einer Radachsenaufhängung eines Fahrzeugs;
wobei die Radachsaufhängung eine an einem Fahrzeugchassis (2) montierte Tragkonsole (3), einen Längslenker (5), der an einem Achskörper (1) der Radachse befestigt ist, einen Gelenkbolzen (15) mit einem Kopf und eine entsprechende Spannmutter (16) sowie eine Luftfeder (8), die zwischen dem Chassis (2) und dem Achskörper (1) wirkt, aufweist,
wobei der Längslenker (5) mittels des Gelenkbolzens (15) und der Spannmutter (16) schwenkbar an der Tragkonsole (3) befestigt ist, wobei die Tragkonsole (3) zwei beabstandete Seitenplatten (3B) umfasst, die jeweils ein Loch (3C) aufweisen, das mit einer Ausrichtfunktion versehen ist, und wobei der Gelenkbolzen (15) sich durch die Löcher (3C) und eine Öse des Längslenkers (5) erstreckt, die zwischen den Seitenplatten (3B) der Tragkonsole (3) angeordnet ist, wobei die Löcher (3C) mit der Ausrichtfunktion unterschiedliche Positionen des Gelenkbolzens (15) in der Tragkonsole (3) und damit eine Ausrichtung des an dem Längslenker (5) befestigten Achskörpers (1) ermöglichen;
wobei der Achsenlift (20) ein Stellglied (22) zum Anheben der Radachse und eine Stützkonsole (21) umfasst, die an der Tragkonsole (3) befestigt werden kann und ein Ende des Stellglieds (22) unterhalb der Tragkonsole (3) trägt, wobei die Tragkonsole (21) Beine (34) aufweist, die sich entlang der Seitenplatten (3B) der Tragkonsole (3) erstrecken, welche Beine (34) einen oberen Beinabschnitt (26) aufweisen, der so ausgebildet ist, dass er gegen den Schwenkbolzenkopf und die Spannmutter (16) oder gegen um den Schwenkbolzenkopf und/oder gegen um die Spannmutter (16) herum angeordnete Zubehörteile (17), wie Buchsen, Distanzringe oder dergleichen, angeordnet werden kann, wobei der Achsenlift (20) zum Nachrüsten an einer vorhandenen Radachsaufhängung geeignet ist, ohne den Gelenkbolzen (15) zu lösen,
**dadurch gekennzeichnet, dass**
der Achsenlift (20) ferner einen Tragbügel (27) umfasst, der mit der Stützkonsole (21) verbunden ist, wobei der Tragbügel (27) im montierten Zustand an einer Unterseite der Tragkonsole (3) anliegt, um der Kraft des Stellglieds entgegenzuwirken, wobei der Tragbügel (27) an der Tragkonsole (3) befestigt werden kann und wobei der Tragbügel (27) und/oder die Stützkonsole (21) ein Ausrichtmittel (30, 35) aufweist, um die Befestigung der Stützkonsole (21) an der Tragkonsole (3) in unterschiedlichen Positionen in Anpassung an die an die unterschiedlichen Ausrichtpositionen des Gelenkbolzens (15) in der Tragkonsole (3) zu ermöglichen.

2. Achsenlift nach Anspruch 1, wobei der Tragbügel (27) eine Querstange (28) und an gegenüberliegenden Enden der Querstange (28) ausgebildete Flansche (29) umfasst, welche Flansche (29) sich parallel und unter einem Winkel, vorzugsweise rechtwinklig, zur Querstange (28) erstrecken, wobei die Flansche (29) mit einem Loch (30) versehen sind und wobei die Beine (34) der Stützkonsole (21) mit einem entsprechenden Loch (35) versehen sind, wobei in einem montierten Zustand das Loch (30) im Flansch (29) und das Loch (35) im entsprechenden Bein (34) im Register sind und ein Befestigungsbolzen (36) durch die Löcher (30, 35) geführt ist, um das Bein (34) mit dem Flansch (29) zu koppeln und zu sichern, wobei die Ausrichtfunktion beinhaltet, dass entweder das Loch (30) im Flansch (29) oder das Loch (35) im Bein (34) ein Langloch ist, um eine Einstellung der Position der Stützkonsole (21) in Bezug auf den Tragbügel (27) zu ermöglichen.

3. Achsenlift nach Anspruch 2, wobei die Stange (28) mit einem aufstehenden Ohr (31) versehen ist, das mit einem Loch (32) ausgebildet ist, das mit einem Loch in einer Frontplatte (3A) der Tragkonsole (3) in Register zu bringen ist, um einen Befestigungsbolzen (33) zur Befestigung der Tragkonsole (27) an der Tragkonsole (3) durchzulassen.

4. Achsenlift nach einem beliebigen der vorstehenden Ansprüche, wobei die oberen Beinabschnitte (26) nur mit einer Vorderseite des Schwenkbolzenkopfes und der Spannmutter (16) oder der Zubehörteile (17) in Eingriff stehen.

5. Achsenlift nach einem beliebigen der vorstehenden Ansprüche, wobei die oberen Beinabschnitte (26) der Stützkonsole (21) eine gekrümmte Kontur aufweisen, die im montierten Zustand in einen Teil des Umfangs des Gelenkbolzenkopfes, der Spannmutter (16) oder der Zubehörteile (17) greift.

6. Radachsaufhängung, die eine an einem Fahrzeugchassis (2) montierte Tragkonsole (3), einen an einem Achskörper (1) der Radachse befestigten Längslenker (5), einen Gelenkbolzen (15) mit einem Kopf und eine entsprechende Spannmutter (16) sowie eine Luftfeder (8), die zwischen dem Chassis (2) und dem Achskörper (1) wirkt, aufweist,
wobei die Längslenker (5) mittels des Gelenkbolzens (15) und der Spannmutter (16) schwenkbar an der Tragkonsole (3) befestigt ist, wobei die Tragkonsole (3) zwei beabstandete Seitenplatten (3B) umfasst, die jeweils ein Loch (3C) aufweisen, das mit einer Ausrichtfunktion versehen ist, und wobei sich der Gelenkbolzen (15) durch die Löcher (3C) und eine Öse des Längslenkers (5) erstreckt, die zwischen den Seitenplatten (3B) der Tragkonsole (3) angeordnet ist, wobei die Löcher (3C) mit der Ausrichtfunktion unterschiedliche Positionen des Gelenkbolzens (15) in der Tragkonsole (3) und damit eine Ausrichtung des Achskörpers (1) an dem Längslenker (5) ermöglichen,
**dadurch gekennzeichnet, dass** die Radachsaufhängung mit einem Achsenlift (20) gemäß einem der vorhergehenden Ansprüche versehen ist.

7. Radachsenaufhängung nach Anspruch 6, wobei die Ausrichtfunktion für den Gelenkbolzen (15) als eine längliche Form der Löcher (3C) in den Seitenplatten (3B) der Tragkonsole (3) realisiert ist, die eine Verschiebung des Gelenkbolzens (15) in Vorwärts- oder Rückwärtsrichtung ermöglicht, um die Achse (1) während der Montage der Radachsaufhängung auszurichten.

8. Radachsenaufhängung nach Anspruch 6, wobei die Ausrichtfunktion des Gelenkbolzens (15) ein Exzenterelement, z.B. eine Scheibe, umfasst, durch das der Gelenkbolzen (15) sich erstreckt und deren Drehung zu einer Verschiebung des Gelenkbolzens (15) in eine Vorwärts- oder Rückwärtsrichtung führt, um die Achse (1) während der Montage der Radachsaufhängung auszurichten.

9. Verfahren zur Befestigung des Achsenliftes (20) nach Anspruch 1-5 an einer vorhandenen Radachsaufhängung, wobei:
- die Tragbügel (27) fest mit der Tragkonsole (3) verbunden wird,
- die Stützkonsole (21) lose mit dem Tragbügel (27) verbunden wird,
- die Stützkonsole (21) in Bezug auf den Tragbügel (27) mittels der Ausrichtfunktion des Achsenliftes (20) so bewegt wird, dass die Beine (34) der Stützkonsole (21) gegen den Schwenkbolzenkopf und die Spannmutter (16), oder gegen um den Schwenkbolzenkopf und/oder um die Spannmutter (16) angeordnete Zubehörteile (17) angeordnet sind, und
- die Stützkonsole (21) an dem Tragbügel (27) befestigt wird.

## Revendications

1. Elévateur (20) d'essieu destiné à être monté sur une suspension d'essieu de roue d'un véhicule;
la suspension d'essieu de roue comprenant un étrier (3) porteur monté sur un châssis (2) de véhicule, un bras tiré (5) fixé à un corps d'essieu (1) de l'essieu de roue, un boulon (15) de pivot ayant une tête et un écrou (16) de serrage correspondant ainsi qu'un ressort pneumatique (8) qui agit entre le châssis (2) et le corps d'essieu (1),
le bras tiré (5) étant monté de manière pivotante sur l'étrier (3) porteur au moyen du boulon (15) de pivot et de l'écrou (16) de serrage, dans lequel l'étrier (3) porteur comprend deux plaques latérales espacées (3B) comportant chacune un trou (3C) pourvu d'un élément d'alignement, et dans lequel le boulon (15) de pivot s'étend à travers lesdits trous (3C) et un œillet du bras tiré (5) est disposé entre les plaques latérales (3B) de l'étrier (3) porteur, les trous (3C) avec l'élément d'alignement permettent des positions variables du boulon (15) de pivot dans l'étrier (3) porteur et ainsi un alignement du corps d'essieu (1) fixé au bras tiré (5);
l'élévateur (20) d'essieu comprenant un actionneur (22) apte à soulever l'essieu de roue et une console (21) de support adaptée à être montée sur l'étrier (3) porteur et supportant une extrémité de l'actionneur (22) sous l'étrier (3) porteur, dans lequel la console (21) de support présente des jambes (34) s'étendant le long des plaques latérales (3B) de l'étrier (3) porteur, lesquelles jambes (34) présentent une partie de jambe supérieure (26) adaptée pour être disposée contre la tête du boulon de pivot et l'écrou (16) de serrage, ou contre des accessoires (17) disposés autour de la tête du boulon de pivot et/ou de l'écrou (16) de serrage, tels que des bagues, des bagues entretoises ou similaires, dans lequel l'élévateur (20) d'essieu est adapté pour être monté ultérieurement sur une suspension d'essieu de roue existante sans desserrer le boulon (15) de pivot,
**caractérisé en ce que**
l'élévateur (20) d'essieu comprend en outre un étrier (27) de support qui est relié à la console (21) de support, lequel étrier (27) de support vient en butée, à l'état monté, contre le dessous de l'étrier (3) porteur pour contrebalancer la force de l'actionneur, laquelle console (27) de support est adaptée pour être fixée à l'étrier (3) porteur et dans lequel l'étrier (27) de support et/ou la console (21) de support présentent un élément (30, 35) d'alignement pour permettre la fixation de la console (21) de support à l'étrier (3) porteur dans différentes positions pouvant s'adapter aux différentes positions d'alignement du boulon (15) de pivot dans l'étrier (3) porteur.

2. L'élévateur d'essieu selon la revendication 1, dans lequel l'étrier (27) de support comprend une barre (28) transversale et des brides (29) formées à des extrémités opposées de la barre (28) transversale, lesquelles brides (29) s'étendent parallèlement et sous un angle, de préférence perpendiculairement, par rapport à la barre transversale (28), dans lequel les brides (29) sont pourvues d'un trou (30) et dans lequel les jambes (34) de la console (21) de support sont pourvues d'un trou (35) correspondant, dans lequel, à l'état assemblé, le trou (30) dans la bride (29) et le trou (35) dans la jambe (34) correspondante sont en correspondance et un boulon (36) de fixation passe à travers lesdits trous (30, 35) pour coupler et fixer la jambe (34) à la bride (29), dans lequel l'élément d'alignement comprend le fait que soit le trou (30) dans la bride (29) soit le trou (35) dans la jambe (34) est un trou oblong de manière à permettre un réglage de la position de la console (21) de support par rapport à l'étrier (27) de support.

3. L'élévateur d'essieu selon la revendication 2, dans lequel la barre (28) est munie d'une patte dressée (31) munie d'un trou (32) destiné à être aligné avec un trou dans une plaque avant (3A) de l'étrier (3) porteur pour faire passer un boulon (33) de fixation afin de fixer l'étrier (27) de support à l'étrier porteur (3).

4. L'élévateur d'essieu selon l'une quelconque des revendications précédentes, dans lequel les parties de jambe supérieures (26) n'engagent qu'un côté avant de la tête de boulon de pivot, de l'écrou (16) de serrage ou des accessoires (17).

5. L'élévateur d'essieu selon l'une quelconque des revendications précédentes, dans lequel les parties de jambe supérieures (26) de la console de support (21) ont un contour incurvé qui, à l'état assemblé, vient en prise avec une partie de la circonférence de la tête du boulon de pivot, de l'écrou (16) de serrage ou des accessoires (17).

6. Suspension d'essieu de roue comprenant un étrier (3) porteur monté sur un châssis (2) de véhicule, un bras tiré (5) attaché à un corps d'essieu (1) de l'essieu de roue, un boulon (15) de pivot comprenant une tête et un écrou (16) de serrage correspondant ainsi qu'un ressort pneumatique (8) qui agit entre le châssis (2) et le corps d'essieu (1),
le bras tiré (5) étant monté de manière pivotante sur l'étrier (3) porteur au moyen du boulon (15) de pivot et de l'écrou (16) de serrage, dans lequel l'étrier (3) porteur comprend deux plaques latérales espacées (3B) comportant chacune un trou (3C) pourvu d'un élément d'alignement, et dans lequel le boulon (15) de pivot s'étend à travers lesdits trous (3C) et un œillet du bras tiré (5) est disposé entre les plaques latérales (3B) de l'étrier porteur, les trous (3C) avec l'élément d'alignement permettent des positions variables du boulon (15) de pivot dans l'étrier (3) porteur et ainsi un alignement du corps d'essieu (1) fixé au bras tiré (5);
**caractérisé en ce que** la suspension d'essieu de roue est munie d'un élévateur d'essieu (20) selon l'une quelconque des revendications précédentes.

7. Suspension d'essieu de roue selon la revendication 6, dans laquelle l'élément d'alignement du boulon (15) de pivot est une forme allongée des trous (3C) dans les plaques latérales (3B) de l'étrier (3) porteur, ce qui permet un décalage du boulon (15) de pivot dans une direction avant ou arrière pour aligner l'essieu (1) lors de l'assemblage de la suspension d'essieu de roue.

8. Suspension d'essieu de roue selon la revendication 6, dans laquelle l'élément d'alignement du boulon (15) de pivot comprend un élément excentrique, par ex. un disque à travers lequel le boulon (15) de pivot s'étend, et une rotation duquel assure un décalage du boulon (15) de pivot dans une direction avant ou arrière pour aligner l'essieu (1) lors de l'assemblage de la suspension d'essieu.

9. Procédé de montage de l'élévateur (20) d'essieu selon les revendications 1 à 5 sur une suspension d'essieu existante, dans lequel:
- l'étrier (27) de support est attaché de manière fixe à l'étrier (3) porteur,
- la console (21) de support est lâchement relié à l'étrier (27) de support,
- la console (21) de support est déplacée par rapport à l'étrier (27) de support au moyen de l'élément d'alignement de l'élévateur (20) d'essieu, de sorte que les jambes (34) de la console (21) de support sont disposées contre la tête de boulon de pivot et l'écrou (16) de serrage, ou contre des accessoires (17) disposés autour de la tête de boulon de pivot et/ou de l'écrou (16) de serrage, et
- la console (21) de support est fixée à l'étrier (27) de support.
